# EUROPEAN PATENT SPECIFICATION

(11) **EP 3 347 268 B1**
(45) Date of publication and mention of the grant of the patent: **27.11.2019**
(21) Application number: 16763060.7
(22) Date of filing: 09.09.2016
(51) Int. Cl.: B64C 29/00, B64C 39/02

(54) **VERTICAL TAKE-OFF AND LANDING AERIAL VEHICLE**
SENKRECHTSTART- UND LANDEFÄHIGES LUFTFAHRZEUG
AÉRONEF À DÉCOLLAGE ET ATTERRISSAGE VERTICAL

(30) Priority: 11.09.2015 US 201514851068
(43) Date of publication of application: 18.07.2018
(73) Proprietor: Ecole Polytechnique Fédérale de Lausanne (EPFL), 1015 Lausanne (CH)
(72) Inventor: DALER, Ludovic, 1003 Lausanne (CH); GARNIER, Arnaud, 1005 Lausanne (CH); BRIOD, Adrien, 1005 Lausanne (CH)
(74) Representative: reuteler & cie SA
(86) International application number: PCT/EP2016/071339
(87) International publication number: WO 2017/042354

(56) References cited:
- WO-A1-2014/198774
- US-A1- 2010 224 723
- US-B1- 6 976 899

## Description

The present invention concerns a vertical take-off and landing (VTOL) aerial vehicle.

VTOL aerial vehicles generally fly thanks to a propulsion system (e.g. one or more propellers) that generates an upward force (lift) to counter gravity. Such vehicles are capable of slow flight (hovering flight), vertical take-off or vertical landing, and have generally a control system to control their orientation or direction in order to stay in a stable orientation or to move sideways. When the aerial vehicle is not in a stable orientation, e.g. its propulsion system creates a force that is not pointing mostly upwards, the aerial vehicle can quickly lose lift, or gain speed towards the direction in which the propulsion system creates a force.

VTOL aerial vehicles that stay aloft using a propulsion system and a control system exist in several configurations known in the prior art.

When an aerial vehicle enters into contact with an obstacle, relatively large external torques and forces can disturb the orientation of the aerial vehicle. While an onboard control system (mechanical and/or software) might counter some amount of disturbances and bring back the aerial vehicle in a stable orientation for flying, such control systems are often unable to correct quickly the large disturbances occurring after a contact with external objects. Such contacts can thus provoke large perturbations of the aerial vehicle's orientation or trajectory, or even lead to a crash to the ground. Most aerial vehicles are thus always kept away from obstacles, to prevent any contact with obstacles. Additionally, most aerial vehicles can only take-off from one resting orientation, in which the propulsion system can create an upwards force, which limits their ability to take-off from uneven ground, or after landing in other orientations.

Many of the above mentioned inconveniences of VTOL aerial vehicles are overcome by the VTOL aerial vehicles described in WO 2014/198774. The systems described therein allow aerial vehicles to collide with obstacles while remaining in a stable orientation most of the time. This known vertical take-off and landing (VTOL) vehicle comprises an inner frame, a gimbal system or decoupling mechanism and an outer frame. The gimbal system allows the outer frame to passively rotate independently from the inner frame, which reduces the disturbances provoked by a contact with an external object, allows rolling on obstacles and allows take-off from any orientation. The VTOL allows the platform to stay in contact with an obstacle, be it below, sideways, or above the platform, and move with respect to the obstacle while staying in contact with it, which is described herein as rolling on it. The VTOL is configured as an aerial vehicle that can take-off from any orientation, even on uneven ground.

The VTOL according to the disclosure of WO 2014/198774 comprises a propulsion system and a control system, the propulsion system being able to generate a lift force, the control system being able to control the orientation of the inner frame, the gimbal system connecting the inner frame to the outer and inner frames, i.e. the outer frame with at least two rotation axis allowing rotation freedom between the outer frame to rotate independently from the inner frame.

The rotation axes are configured to decouple mechanically the outer frame from the inner frame with the gimbal system, so that the outer frame can rotate passively around the inner frame. The inner frame contains the propulsion system and control system that keep the aerial vehicle aloft by generating an upward force and rejecting small disturbances, while the outer frame prevents external objects from touching the inner frame and affecting its orientation. The outer frame is geometrically configured to withstand substantial impacts and protect the VTOL inner frame, propulsion and control systems so that the VTOL can re-stabilize after impacts and continue to travel.

The gimbal system allows the outer frame to rotate passively around the inner frame about two or more rotation axes. Therefore some or all of the torques applied to the outer frame will provoke its rotation about these axes, but will not affect the inner frame, so that the propulsion system remains in a stable orientation for hovering flight. An aerial vehicle configured according to the disclosure can thus collide with obstacles while its inner frame remains in a stable orientation, which prevents large instabilities or crashes of the aerial vehicle from occurring when the propulsion system experiences significant orientation perturbations.

Further, since the orientation of the inner frame is not constrained when the outer frame is in contact with obstacles, the control system is still able to make the aerial vehicle move sideways, up or down while the outer frame remains in constant contact with obstacles. This allows the aerial vehicle to fly towards different directions while staying in contact with external objects, walls or ceilings (in other words: it is able to roll on obstacles while in flight).

The system disclosed in WO 2014/198774 is also useful for taking-off from any orientation: when on the ground, the inner frame can rotate freely inside the outer frame and a mechanism can thus rotate the inner frame to an orientation appropriate for take-off (e.g. with the propulsion able to generate an upwards force). The rotation of the inner frame can be accomplished by placing the center of mass of the inner frame so that the gravity pulls it in the desired orientation, or by using the control system of the inner frame.

There is however a constant need to improve the stability and ease of control of VTOL aerial vehicles especially when encountering an obstacle, and at the same time to maintain or improve performance. Improved performance may for instance derive from one or more of increasing autonomy, increasing velocity, or increasing payload. For certain applications, for instance inspection applications, reducing the size of the VTOL while maintaining inspection capabilities (on board cameras and sensors), performance and good remote control of the VTOL may also be an important factor.

In view of the foregoing, an object of the present invention is to provide a VTOL aerial vehicle with good stability, performance and ease of control.

Objects of the invention have been achieved by providing the VTOL aerial vehicle according to claim 1.

Disclosed herein, according to the invention, is a vertical take-off and landing (VTOL) aerial vehicle, comprising:
an outer frame; and,
a decoupling mechanism; and
   an inner frame connected to the outer frame by the decoupling mechanism, the inner frame comprising a propulsion system configured to generate a lift force;
the decoupling mechanism comprising a beam coupled to the inner frame and forming a first rotation axis, and the beam being rotationally coupled to the outer frame by a second rotation axis substantially orthogonally disposed with respect to the first rotation axis.

The beam comprises a rotation joint located near the center of the beam and the first rotation axis is formed by one or more bearings located within the rotation joint.

In an embodiment, the inner frame has a center of mass substantially in line with each rotation axis.

In an embodiment, the first rotation axis is substantially vertical.

In an embodiment, the beam is non-linear.

In an embodiment, the propulsion system comprises four propellers, at least portions of two of the propellers overlapping.

In an embodiment, the propulsion system comprises four propellers, at least portions of two of the propellers overlapping.

In an embodiment, the beam is comprised of two parallel portions, one of the parallel portions being in axial alignment with a center of mass of the VTOL aerial vehicle.

In an embodiment, the VTOL aerial vehicle may further comprise a ring coupled to the beam and the ring coupled to the outer frame in a third rotation axis, the second and third rotation axes being substantially orthogonal.

In an embodiment, the beam includes sliders; and a ring coupled to the sliders, the ring rotating in a second rotation axis about the beam, the ring further sliding through the sliders in a third rotation axis, the second and third rotation axes being orthogonal.

Also disclosed herein is a vertical take-off and landing (VTOL) aerial vehicle, comprising:
an outer protective cage;
an inner frame comprising propulsion means for generating a lift force;
control means for controlling orientation of the inner frame; and
a decoupling means for providing at least two (2) rotation degrees of freedom of the inner frame with respect to the outer protective cage.

The decoupling means may comprise a beam with sliding surfaces coupled to a ring.

The decoupling means may comprise a beam with sliding surfaces coupled to a ring, the beam having a rotation joint centrally located along the beam, the decoupling means providing four rotation degrees of freedom.

The decoupling means may comprise a beam coupled to a ring with rotation joints on extreme ends where the beam interconnects with the ring, the beam having a rotation joint centrally located along the beam, the decoupling means providing three rotation degrees of freedom.

The decoupling means may comprise a beam, the beam comprising two substantially parallel portions.

The propulsion means may comprise four propellers, at least portions of two of the four propellers overlapping.

Also disclosed herein is a vertical take-off and landing (VTOL) aerial vehicle, comprising:
an outer frame;
an inner ring coupled to the outer frame;
a beam rotationally coupled to the inner ring;
a propulsion system configured to generate a lift force; the propulsion system coupled to the beam by a decoupling means providing at least two rotation degrees of freedom of the propulsion system with respect to the inner ring.

The propulsion system may comprise propellers that partially overlap when in motion.

The beam may further comprise sliders coupled to the inner ring to rotationally couple the beam to the inner ring.

The plurality of outer rings may have no degrees of freedom of rotation with respect to the inner ring.

The inner ring may have at least one degree of freedom of rotation with at least one of the plurality of outer rings.

The aerial vehicle (VTOL) thus includes a decoupling mechanism comprised of a beam and a ring. The beam may be attached to a rotation joint to create a first rotation axis. The rotation joint may be configured to provide a second rotation axis substantially orthogonal to the first rotation axis.

The beam may have sliders at ends thereof that allow the ring to slide along the beam, creating a third rotation axis.

The beam may be linear or non-linear depending upon implementation.

The inner frame of the aerial vehicle (VTOL) described herein may be implemented within a coaxial rotor, or non-coaxial quadrotor aerial vehicle, whereby the propellers of the quadrotor overlap one another so larger propellers may be used within needing to enlarge the size of the inner frame.

The VTOL according to the disclosure will be better understood with reference to the accompanying figures, in which:
Fig. 1 illustrates portions of an aerial vehicle including a decoupling mechanism comprising a non-straight beam and a ring;
Fig. 2 illustrates an aerial vehicle including a decoupling mechanism comprising a straight beam with sliders and a ring, with a propulsion system comprising a quadrotor configuration;
Fig. 3 illustrates a perspective view of an aerial vehicle having a decoupling mechanism including the beam, with a propulsion system comprising a coaxial propeller configuration;
Fig. 4(a) illustrates a perspective view of the decoupling mechanism linear beam;
Fig. 4(b) illustrates a perspective view of the decoupling mechanism non-linear beam;
Fig. 4(c) illustrates an exploded view of the decoupling mechanism configuration including the beam having sliders and the ring;
Figs. 5(a) through 5(e) illustrate various exploded views of decoupling mechanism configurations including the beam according to the disclosure; and
Figs. 6(a) through 6(d) illustrate plan views of coaxial and quadrotor aerial vehicles having overlapping propeller configurations in relation to various decoupling mechanisms.

An aerial vehicle according to the disclosure comprises an outer frame decoupled mechanically from an inner frame with a gimbal system, so that the outer frame can rotate passively around the inner frame. The inner frame contains the propulsion system and control system that keep the aerial vehicle aloft by generating an upward force and rejecting small disturbances, while the outer frame prevents external objects from touching the inner frame and affecting its orientation. The gimbal system allows the outer frame to rotate passively around the inner frame about one or more rotation axes and it does not need to be actively actuated or controlled (e.g. with motors).

On conventional aerial vehicles, the protective structure (if it exists) is rigidly attached to the propulsion and control systems. The contact with an external object will thus generate a torque and thus a rotation of the entire aerial vehicle, including the propulsion system. This might have as strong impact on the ability of the aerial vehicle to remain stable in the air because the propulsion system might not generate a mostly upwards force anymore, and rather propel the aerial vehicle sideways while it loses altitude. However, decoupling the inner frame from the outer frame with a gimbal system allows the inner frame to remain independent of the rotation of the outer frame. The contact with an external object will thus generate a rotation of the outer frame, while the inner frame and the propulsion system remain in a stable orientation.

When two axes of a gimbal system are aligned with each other, it loses a degree of freedom, and the inner frame is not fully decoupled from the outer frame anymore. This situation, called a gimbal lock, might prevent the gimbal system from reducing the disturbances from a contact with an external object, especially if a rotation axis in the horizontal plane is lost, as the pitch and roll axes are the most critical for keeping the lift force produced by the propulsion system mostly upwards. Solutions to this problem include: adding a gimbal or degree of freedom and/or actuating some gimbals to control their position away from a gimbal lock, adding repulsive or attractive elements like magnets in order to favor the position of the gimbals away from a gimbal lock. If using actuators, these should be reversible or capable of being turned off so that they allow free rotation with low friction when a collision happens.

Decoupling mechanisms as described herein are mechanical apparatuses that provide one or more rotation degrees of freedom of the outer frame with respect to the inner frame or components (e.g. inner ring, beam and other structures as described herein). The rotation freedoms are along rotation axes, which are typically generated by mechanical rotation joints or by other mechanical means as described.

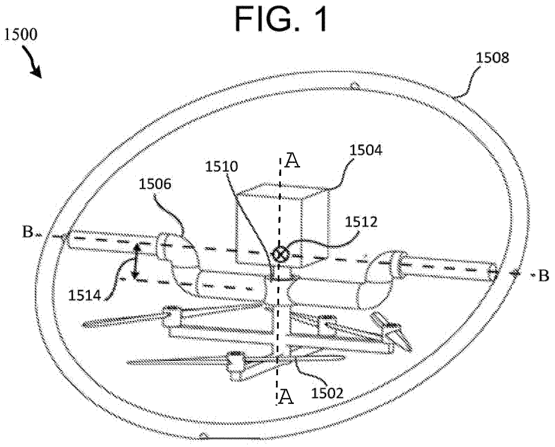

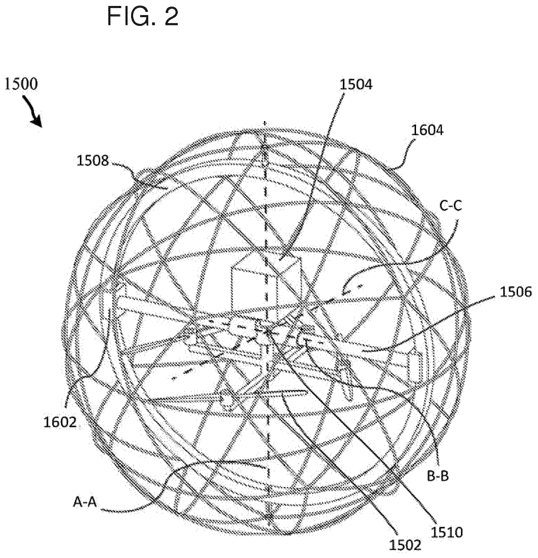

Fig. 1 and 2 illustrate embodiments of an aerial vehicle 1500 according to the present disclosure. The aerial vehicle 1500 includes propellers 1502 that generate propulsive forces to move the aerial vehicle 1500, and a control system/electronics block 1504 that includes, for example, electronics used to control the aerial vehicle 1500, an energy source, for instance a battery, and a payload (e.g. a camera or other instrumentation). The control system 1504 may be located above a beam 1506 or a rotation joint 1510 described below and the propulsion system may be located below the beam 1506. The aerial vehicle 1500 also includes a decoupling mechanism including the beam 1506 and a ring 1508. The beam 1506 has a rotation joint 1510 located near the center of the beam 1506. The rotation joint 1510 may be configured to provide at least two axes of rotation, illustrated as A-A and B-B (best seen in Fig. 2). The first and second rotation axes A-A, B-B may be substantially perpendicular/orthogonal, and preferably are perpendicular/orthogonal to each other. The second rotation axis B-B may be substantially coaxial to a length of the beam 1506, while the first rotation axis A-A may be substantially perpendicular with the beam 1506.

As illustrated, the beam 1506 may be non-straight/non-linear (as illustrated in Fig. 1) or straight (as illustrated in Fig. 2). When the beam 1506 is non-linear, a center of mass 1512 of the inner frame is located above the rotation joint 1510 along the rotation axis B-B. Offset of the rotational joint 1510 from a plane comprising the second axis of rotation B-B and orthogonal to the first axis of rotation A-A is depicted as 1514. For example, the rotation axis B-B may be created by one or more bearings that interact with the beam 1506 to allow the beam 1506 to rotate. The first rotation axis A-A may be created by one or more bearings located within the rotation joint 1510 that allow rotation of one or more elements of the inner frame. The non-straight beam can accommodate inner frames of arbitrary shapes, and allows more freedom for component placement on the inner frame, typically while ensuring that the center of mass (COM) of the inner frame is mostly aligned with the rotation axes.

With specific reference to Fig. 2, a beam 1506 having sliders 1602 is described. The sliders 1602 slide freely along the ring 1508. The sliders 1602 may include one or more bearings located therein that allow the ring 1508 to move easily through the sliders 1602. Alternatively, movement of the ring through the sliders may be facilitated by implementation using materials with a low coefficient of friction. Use of the sliders 1602 on the beam 1506 creates an additional rotation axis C-C. This results in the aerial vehicle 1500 have a total of three rotation axes A-A, B-B, C-C. Put another way, use of the sliders 1602 on the beam 1506 results in the inner frame having three degrees of freedom. An outer frame 1604 may be movably coupled to the inner frame. Coupling of the outer frame 1604 to the decoupling mechanism may include the use of one or more bearings. Moreover, the outer frame 1604 may be indirectly coupled to the ring 1508 of the decoupling mechanism. While it has been described that the sliders 1602 may be implemented on the straight beam 1506, one skilled in the art should appreciate that the sliders 1602 may be implemented on the non-linear beam 1506 without departing from the scope of the present disclosure.

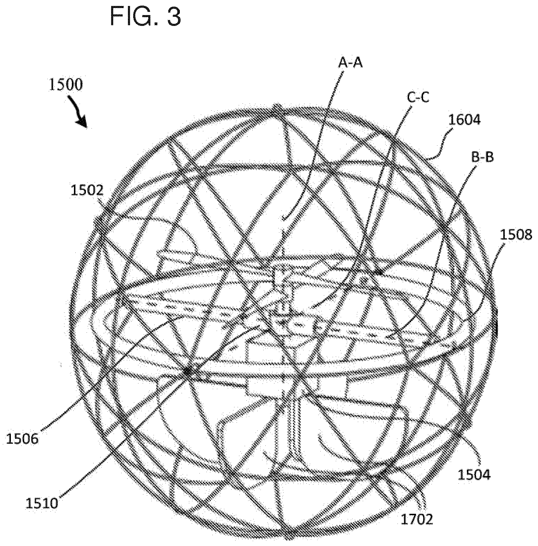

Figs. 3 illustrates the aerial vehicle 1500 having a decoupling mechanism comprised of the beam 1506 and the ring 1508. The aerial vehicle includes two propellers 1502 and the control system/electronics block 1504. Between the propellers 1502 and the control system 1504 is the rotation joint 1510 and below the control system 1504 are control surfaces 1702. The control surfaces 1702 may be comprised of two pairs, with each pair of control surfaces 1702 including two parallel control surfaces 1702. The control surfaces 1702 control the pitch motion and roll motion of the aerial vehicle 1500.

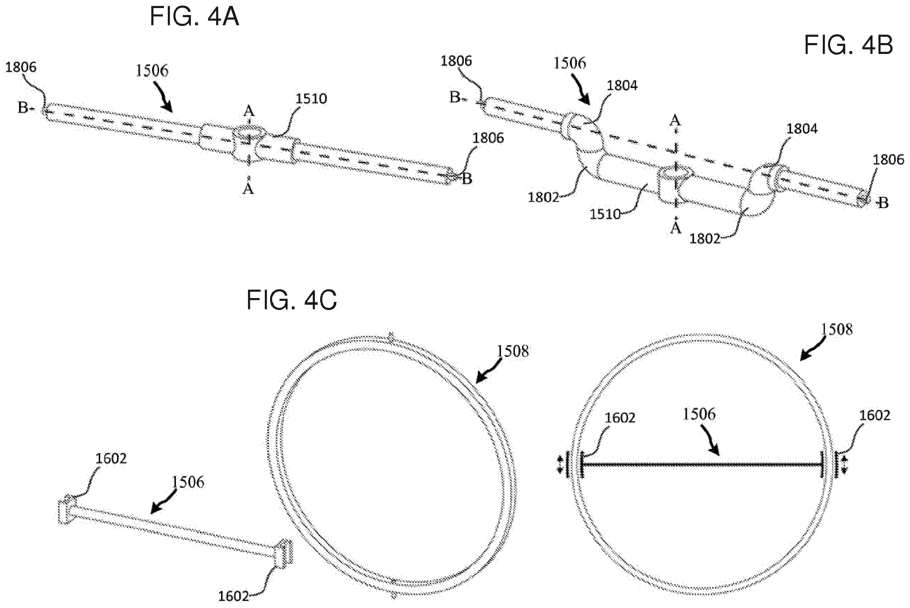

Figs. 4(a) and 4(b) illustrate the beam 1506 according to the present disclosure in alternative configurations, as described in relation to Figs 2 and 1, respectively. The beam 1506 may be linear (illustrated in Fig. 4(a)) or non-linear (Fig. 4(b)). The non-linear beam 1506 has four bends (two pairs) located therein. For example, the two bends 1802 closest to the rotation joint 1510 may bend at substantially 90° in the same direction and the two bends 1804 furthest away from the rotation joint 1510 may bend at substantially 90°, resulting in the beam 1506 having two substantially parallel portions. The rotation axis B-B of the bent beam 1506 runs through the linear portions distal from the rotation joint 1510. One or more bearings may be implemented within the rotation joint 1510 to allow rotation about the first and second rotation axes A-A, B-B. The beam 1506 may have rotation joints 1806 that allow the beam 1506 to directly or indirectly couple to the ring 1508 (not illustrated). The rotation joints 1806 may be located at distal, exterior ends of the beam 1506.

Fig. 4(c) illustrates the beam 1506 having sliders 1602. The sliders 1602 couple at least one sliding surface to the ring 1508. The sliders 1602 may be implanted on both of the beams illustrated in Figs. 4(a) and 4(b). Implementation of the sliders 1602 on the beam 1506 creates another rotation axis separate from the first and second rotation axes A-A, B-B. Illustration of rotation axis created by use of the sliders 1602 is depicted as rotation axis C-C in Fig. 2. The sliders can be coupled to a ring which is rigidly attached to the outer frame.

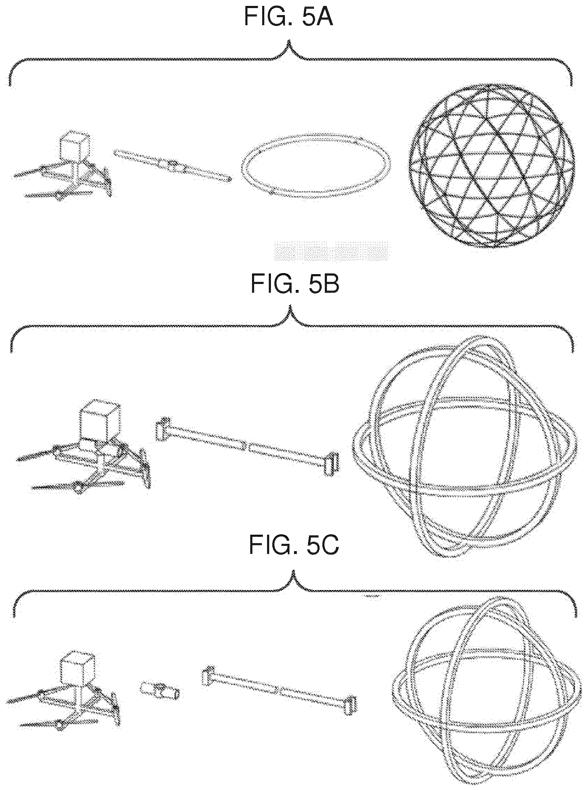

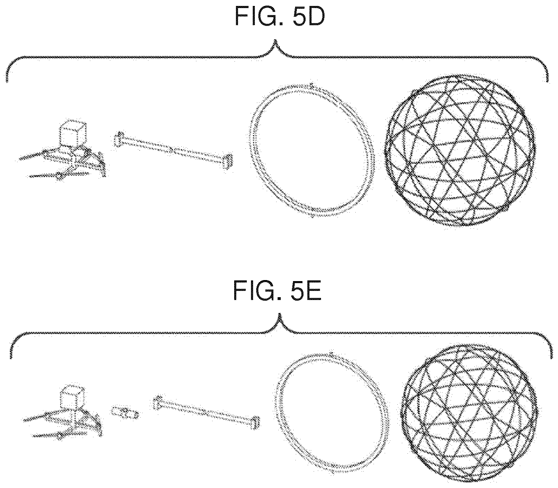

Figs. 5(a) through 5(e) illustrate exploded views of various combinations and configurations of the decoupling mechanism components according to the present disclosure. Specifically, Fig. 5(b) illustrates a decoupling mechanism providing 2 degrees of rotation freedom (2 rotation axes), Figs. 5(a), 5(c), and 5(d) illustrate decoupling mechanisms providing 3 degrees of rotation freedom (3 rotation axes), and Fig. 5(e) illustrates a decoupling mechanism providing 4 degrees of rotation freedom (4 rotation axes). Fig. 5(c) illustrates a configuration of the decoupling mechanism which provides 3 degrees of rotation freedom while not comprising a single decoupled ring, the only ring being rigidly attached to the protective frame.

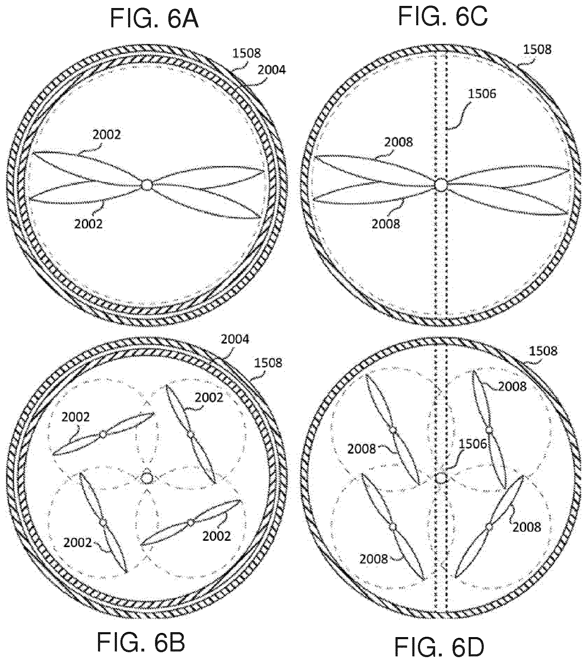

Figs. 6(a) through 6(d) show the effects on propulsion system size of aerial vehicles having various decoupling mechanisms according to the present disclosure. Referring to Fig. 6(a) and 6(b), coaxial rotor aerial vehicles are illustrated. The aerial vehicle illustrated in Fig. 6(a) includes two propellers 2002 and a decoupling mechanism having two different rings 2004, 1508. The aerial vehicle illustrated in Fig. 6(b) includes two propellers 2008 and a decoupling mechanism having the beam 1506 coupled to the ring 1508. By implementing the beam 1506, the inner ring 2004 of the decoupling mechanism can be removed, resulting in the propellers 2008 being larger than the propellers 2002 without enlargement of the outer ring 1508. Thus, implementation of the inner frame including the beam 1506 is beneficial because it allows the propulsion system of the aerial vehicle to be larger without changing the outer size of the aerial vehicle. Having a larger propulsion system allows for increased flight time, increased reactivity, and increased payload capability, for example.

The inner frame comprising the propulsion and control systems is mounted inside the outer frame which, in a preferred embodiment, can rotate passively and freely around the inner frame around each of the rotation axes. The propulsion and control systems comprised in the inner frame could be of any type and not necessarily the ones illustrated. Also, the outer frame can be any type of protective structure and not necessarily the one i.

Referring to Figs. 6(c) and 6(d), quadrotor aerial vehicles are illustrated. The quadrotor aerial vehicle of Fig. 6(c) includes four propellers 2002 and a decoupling mechanism having two different rings 2004, 1508. The quadrotor aerial vehicle of Fig. 6(d) includes four propellers 2008 and a decoupling mechanism having the beam 1506 coupled to the ring 1508. Like the coaxial rotor aerial vehicles of Fig. 6(a), by implementing the beam 1506 within the quadrotor aerial vehicle, the inner ring 2004 of the decoupling mechanism can be removed, resulting in the propellers 2008 being larger than the propellers 2002 without enlargement of the outer ring 1508. Thus, implementation of the decoupling mechanism including the beam 1506 is beneficial because it allows the propulsion system of the aerial vehicle to be larger without changing the outer size of the aerial vehicle. Having a larger propulsion system allows for increased flight time, increased reactivity, and increased payload capability, for example.

The propellers 2002, 2008 of the quadrotor aerial vehicles of Figs. 6(c) and 6(d) may be configured to overlap each other, resulting in the aerial vehicle being more compact. Compactness is the ratio between an external dimension of the propulsion system of the aerial vehicle and an external dimension of one propeller of the aerial vehicle. By having the propellers 2002, 2008 configured to overlap, advantage of the high performances of quadrotors (i.e., mechanical simplicity, high reactivity, etc.) are obtainable while reducing the typical large size of quadrotors.

Various benefits of the decoupling mechanisms have been disclosed herein, and other benefits should be apparent to those skilled in the art. Without limitation, specific benefits of the disclosed decoupling mechanisms include:
- Gimbal lock sensitivity reduction: Gimbal locks occurring to the disclosed decoupling mechanisms have less impact on the stability of the aerial vehicle. A gimbal lock is a loss of one degree of freedom, which occurs when the third axis of rotation C-C is aligned with the first axis of rotation A-A. When the axes A-A, C-C are substantially aligned, a small cage rotation typically generates large motions of the decoupling mechanism, which generates virtual friction in the decoupling mechanism because of the inertia of the mechanical parts that need to be accelerated. In the disclosed configurations, the beam has less inertia than the ring of the prior art gimbal described in WO 2014/198774 that it replaces.
- Obstruction reduction: Vertical ring implementations often obstruct the view of the camera. In the implementations involving the decoupling mechanisms of Figs. 1A through 6(d), there is only one ring that is often horizontal, thus not in the field of view of the camera.

While embodiments described herein include propulsion systems comprised of coaxial propellers or quadrotors, one skilled in the art should appreciate that any of various propulsion systems with other numbers of coaxial or non-coaxial propellers that overlap may be implemented.

Although the devices, systems, and methods have been described and illustrated in connection with certain embodiments, many variations and modifications will be evident to those skilled in the art. The discourse is thus not to be limited to the precise details of methodology or construction set forth above, the full scope of the invention being only defined by the wording of the appended claims.

## Claims

1. A vertical take-off and landing (VTOL) aerial vehicle, comprising:
an energy source;
a propulsion system configured to generate a lift force;
a control system (1504) including electronics to control the aerial vehicle;
an outer frame (1604);
a decoupling mechanism; and
an inner frame connected to the outer frame by the decoupling mechanism, the inner frame comprising the propulsion system, the control system, and the energy source ;
the decoupling mechanism comprising a beam (1506) coupled to the inner frame and forming a first rotation axis (A,A) for rotation of the inner frame with respect to the beam, and the beam being rotationally coupled to the outer frame by a second rotation axis (B-B) substantially orthogonally disposed with respect to the first rotation axis,
the beam comprising a rotation joint (1510) located near the center of the beam, the first rotation axis being formed by one or more bearings located within the rotation joint.

2. The VTOL aerial vehicle of claim 1, wherein the inner frame further comprises a payload including a camera or other instrumentation.

3. The VTOL aerial vehicle of any preceding claim, wherein the inner frame has a center of mass substantially in line with each rotation axis.

4. The VTOL aerial vehicle of any preceding claim, wherein the first rotation axis is substantially vertical.

5. The VTOL aerial vehicle of any preceding claim, wherein the beam is non-linear and the rotation joint is offset from a plane orthogonal to the first rotation axis and comprising the second rotation axis.

6. The VTOL aerial vehicle of claim 5, wherein the non-linear beam has four bends (1802, 1804) located therein.

7. The VTOL aerial vehicle of claim 6, wherein two bends (1802) closest to the rotation joint bend at substantially 90° in the same direction and two bends (1804) furthest away from the rotation joint bend at substantially 90°.

8. The VTOL aerial vehicle of any preceding claim, wherein the second rotation axis comprises rotation joints located at distal, exterior ends of the beam.

9. The VTOL aerial vehicle of any preceding claim, wherein the inner frame comprising the propulsion and control systems is mounted inside the outer frame which can rotate passively and freely around the inner frame around each of the rotation axes.

10. The VTOL aerial vehicle of any preceding claim, wherein the beam is comprised of two parallel portions, one of the parallel portions being in axial alignment with a center of mass of the VTOL aerial vehicle.

11. The VTOL aerial vehicle of any preceding claim, further comprising a ring (1508) coupled to the beam and the ring coupled to the outer frame in a third rotation axis, the second and third rotation axes being substantially orthogonal.

12. The VTOL aerial vehicle of any preceding claim, wherein the beam includes sliders (1602); and a ring coupled to the sliders, the ring rotating in a second rotation axis about the beam, the ring further sliding through the sliders in a third rotation axis, the second and third rotation axes being orthogonal.

13. The VTOL aerial vehicle of any preceding claim, wherein the propulsion system comprises propellers that are non-coaxial and partially overlap when in motion.

14. The VTOL aerial vehicle of claim 13, wherein the propulsion means comprises four propellers (1502, 2002, 2008), at least portions of two of the four propellers overlapping when in motion.

## Patentansprüche

1. Vertikal startendes und landendes (VTOL) Luftfahrzeug, das Folgendes umfasst:
eine Energiequelle;
ein Antriebssystem, das dazu ausgelegt ist, eine Hebekraft zu erzeugen;
ein Steuersystem (1504), das eine Elektronik zum Steuern des Luftfahrzeugs beinhaltet;
einen äußeren Rahmen (1604);
einen Entkopplungsmechanismus und
einen inneren Rahmen, der über den Entkopplungsmechanismus mit dem äußeren Rahmen verbunden ist, wobei der innere Rahmen das Antriebssystem, das Steuersystem und die Energiequelle umfasst;
wobei der Entkopplungsmechanismus einen Träger (1506) umfasst, der an den inneren Rahmen gekoppelt ist und eine erste Drehachse (A,A) zum Drehen des inneren Rahmens mit Bezug auf den Träger bildet, und wobei der Träger durch eine zweite Drehachse (B-B), die mit Bezug auf die erste Drehachse im Wesentlichen orthogonal angeordnet ist, an den äußeren Rahmen drehgekoppelt ist,
wobei der Träger ein Drehgelenk (1510) umfasst, das sich nahe der Mitte des Trägers befindet, wobei die erste Drehachse von einem oder mehreren Lagern, die sich im Drehgelenk finden, gebildet wird.

2. VTOL-Luftfahrzeug nach Anspruch 1, wobei der innere Rahmen ferner eine Nutzlast umfasst, die eine Kamera oder andere Instrumente beinhaltet.

3. VTOL-Luftfahrzeug nach einem der vorhergehenden Ansprüche, wobei der innere Rahmen ein Massezentrum aufweist, das im Wesentlichen mit jeder Drehachse fluchtet.

4. VTOL-Luftfahrzeug nach einem der vorhergehenden Ansprüche, wobei die erste Drehachse im Wesentlichen vertikal ist.

5. VTOL-Luftfahrzeug nach einem der vorhergehenden Ansprüche, wobei der Träger nichtlinear ist und das Drehgelenk von einer Ebene, die zur ersten Drehachse orthogonal steht und die zweite Drehachse umfasst, versetzt ist.

6. VTOL-Luftfahrzeug nach Anspruch 5, wobei der nichtlineare Träger vier Bögen (1802, 1804), die sich darin befinden, aufweist.

7. VTOL-Luftfahrzeug nach Anspruch 6, wobei zwei Bögen (1802), die dem Drehgelenk am nächsten sind, im Wesentlichen um 90° in dieselbe Richtung gebogen sind und zwei Bögen (1804), die am weitesten vom Drehgelenk entfernt sind, im Wesentlichen um 90° gebogen sind.

8. VTOL-Luftfahrzeug nach einem der vorhergehenden Ansprüche, wobei die zweite Drehachse Drehgelenke umfasst, die sich an distalen äußeren Enden des Trägers befinden.

9. VTOL-Luftfahrzeug nach einem der vorhergehenden Ansprüche, wobei der innere Rahmen, der das Antriebs- und das Steuersystem umfasst, im äußeren Rahmen montiert ist, der sich um jede der Drehachsen passiv und frei um den inneren Rahmen drehen kann.

10. VTOL-Luftfahrzeug nach einem der vorhergehenden Ansprüche, wobei der Träger zwei parallele Abschnitte umfasst, wobei einer der parallelen Abschnitte auf ein Massezentrum des VTOL-Luftfahrzeugs axial ausgerichtet ist.

11. VTOL-Luftfahrzeug nach einem der vorhergehenden Ansprüche, das ferner einen Ring (1508) umfasst, der an den Träger gekoppelt ist, und wobei der Ring in einer dritten Drehachse an den äußeren Rahmen gekoppelt ist, wobei die zweite und die dritte Drehachse im Wesentlichen orthogonal sind.

12. VTOL-Luftfahrzeug nach einem der vorhergehenden Ansprüche, wobei der Träger Gleiter (1602) und einen an die Gleiter gekoppelten Ring beinhaltet, wobei sich der Ring in einer zweiten Drehachse um den Träger dreht, wobei der Ring ferner in einer dritten Drehachse durch die Gleiter gleitet, wobei die zweite und die dritte Drehachse orthogonal sind.

13. VTOL-Luftfahrzeug nach einem der vorhergehenden Ansprüche, wobei das Antriebssystem Propeller umfasst, die nicht koaxial sind und sich in Bewegung teilweise überlappen.

14. VTOL-Luftfahrzeug nach Anspruch 13, wobei das Antriebsmittel vier Propeller (1502, 2002, 2008) umfasst und mindestens Abschnitte von zwei der vier Propeller sich in Bewegung überlappen.

## Revendications

1. Aéronef à décollage et atterrissage vertical (VTOL) comprenant :
une source d'énergie ;
un système de propulsion configuré pour générer une force de levée ;
un système de commande (1504) comprenant l'électronique afin de commander l'aéronef ;
un bâti externe (1604) ;
un mécanisme de découplage ; et
un bâti interne raccordé au bâti externe par le mécanisme de découplage, le bâti interne comprenant le système de propulsion, le système de commande et la source d'énergie ;
le mécanisme de découplage comprenant une poutre (1506) couplée au bâti interne et formant un premier axe de rotation (A, A) pour la rotation du bâti interne par rapport à la poutre, et la poutre étant couplée en rotation au bâti externe par un deuxième axe de rotation (B-B) disposé de manière sensiblement orthogonale par rapport au premier axe de rotation,
la poutre comprenant un joint de rotation (1510) positionné à proximité du centre de la poutre, le premier axe de rotation étant formé par un ou plusieurs paliers positionnés à l'intérieur du joint de rotation.

2. Aéronef à VTOL selon la revendication 1, dans lequel le bâti interne comprend en outre une charge utile comprenant une caméra ou une autre instrumentation.

3. Aéronef à VTOL selon l'une quelconque des revendications précédentes, dans lequel le bâti interne a un centre de masse sensiblement aligné avec chaque axe de rotation.

4. Aéronef à VTOL selon l'une quelconque des revendications précédentes, dans lequel le premier axe de rotation est sensiblement vertical.

5. Aéronef à VTOL selon l'une quelconque des revendications précédentes, dans lequel la poutre est non linéaire et le joint de rotation est décalé d'un plan orthogonal au premier axe de rotation et comprenant le deuxième axe de rotation.

6. Aéronef à VTOL selon la revendication 5, dans lequel la poutre non linéaire a quatre coudes (1802, 1804) positionnés à l'intérieur de cette dernière.

7. Aéronef à VTOL selon la revendication 6, dans lequel les deux coudes (1802) les plus proches du joint de rotation se coudent sensiblement à 90° dans la même direction et les deux coudes (1804) les plus éloignés du joint de rotation se coudent sensiblement à 90°

8. Aéronef à VTOL selon l'une quelconque des revendications précédentes, dans lequel le deuxième axe de rotation comprend des joints de rotation positionnés au niveau des extrémités extérieures distales de la poutre.

9. Aéronef à VTOL selon l'une quelconque des revendications précédentes, dans lequel le bâti interne comprenant les systèmes de propulsion et de commande est monté à l'intérieur du bâti externe qui peut tourner de manière passive et libre autour du bâti interne autour de chacun des axes de rotation.

10. Aéronef à VTOL selon l'une quelconque des revendications précédentes, dans lequel la poutre est composée de deux parties parallèles, l'une des parties parallèles étant en alignement axial avec un centre de masse de l'aéronef à VTOL.

11. Aéronef à VTOL selon l'une quelconque des revendications précédentes, comprenant en outre une bague (1508) couplée à la poutre et la bague étant couplée au bâti externe d'un troisième axe de rotation, les deuxième et troisième axes de rotation étant sensiblement orthogonaux.

12. Aéronef à VTOL selon l'une quelconque des revendications précédentes, dans lequel la poutre comprend des glissières (1602) ; et une bague couplée aux glissières, la bague tournant dans un deuxième axe de rotation autour de la poutre, la bague coulissant en outre par le biais des glissières dans un troisième axe de rotation, les deuxième et troisième axes de rotation étant orthogonaux.

13. Aéronef à VTOL selon l'une quelconque des revendications précédentes, dans lequel le système de propulsion comprend des propulseurs qui sont non axiaux et se chevauchent partiellement, lorsqu'ils sont en mouvement.

14. Aéronef à VTOL selon la revendication 13, dans lequel le moyen de propulsion comprend quatre propulseurs (1502, 2002, 2008), au moins des parties de deux des quatre propulseurs se chevauchant lorsqu'elles sont en mouvement.
